# EUROPEAN PATENT APPLICATION

(11) **EP 4 650 204 A1**
(43) Date of publication of application: **19.11.2025**
(21) Application number: 23917107.7
(22) Date of filing: 24.10.2023
(51) Int. Cl.: B60K 15/05, B60L 53/00, B62D 25/24, B60Q 9/00

(54) **PROMPTING METHOD AND APPARATUS**

(30) Priority: 16.01.2023 CN 202310098074
(71) Applicant: Shenzhen Yinwang Intelligent Technologies Co., Ltd., Shenzhen, Guangdong 518110 (CN)
(72) Inventor: LI, Zheng, Shenzhen, Guangdong 518129 (CN); WANG, Jing, Shenzhen, Guangdong 518129 (CN); YU, Jiapeng, Shenzhen, Guangdong 518129 (CN); YANG, Jinghuan, Shenzhen, Guangdong 518129 (CN); SONG, Xianxi, Shenzhen, Guangdong 518129 (CN)
(74) Representative: Thun, Clemens
(86) International application number: PCT/CN2023/126264
(87) International publication number: WO 2024/152639

(57) **Abstract**

A prompt method and apparatus are provided, to improve vehicle charging experience of a user. According to the method, after a vehicle enters a parking lot or a vehicle is parked, whether the user has a charging intent may be determined based on obtained state of charge information and parking information; and when it is determined that the user has a parking intent, a prompt apparatus is controlled to output first prompt information, to prompt the user to open a charging cover in a timely manner. In this way, it can be ensured that the charging cover has been opened before the user operates a charging connector, thereby effectively improving the charging experience of the user.

## Description

### CROSS-REFERENCE TO RELATED APPLICATIONS

This application claims priority to Chinese Patent Application No. 202310098074.2, filed with the China National Intellectual Property Administration on January 16, 2023 and entitled "PROMPT METHOD AND APPARATUS", which is incorporated herein by reference in its entirety.

### TECHNICAL FIELD

This application relates to the field of vehicle technologies, and in particular, to a prompt method and apparatus.

### BACKGROUND

Electric vehicles are increasingly popular, and charging is an indispensable operation for the electric vehicles. In a charging scenario of an electric vehicle, when a user unlocks a charging connector and prepares to charge the vehicle, a charging cover may be forgotten to be opened. In this case, the user can only put down the charging connector, return to a cockpit to open the charging cover, and then pick up the charging connector to perform a charging operation. As a result, experience of the user in the charging scenario of the electric vehicle is poor.

Therefore, how to improve the experience of the user in the charging scenario of the electric vehicle is an urgent problem to be resolved in this field.

### SUMMARY

This application provides a prompt method and apparatus, to improve vehicle charging experience of a user.

It should be understood that the prompt method provided in embodiments of this application may be implemented by a prompt system.

The prompt system includes a collection apparatus, a processing apparatus, and a prompt apparatus.

The collection apparatus may be an independent apparatus, or may be a combination of at least two apparatuses. The collection apparatus may include a camera apparatus, a radar apparatus, a sensing apparatus, a dashboard camera, and the like.

The processing apparatus may be a server having a processing function, for example, a central processing unit, or may be a processing chip in a server. This is not specifically limited in embodiments of this application.

The prompt apparatus may be a vehicle-mounted prompt apparatus, for example, may be a vehicle-mounted display, or may be a terminal prompt apparatus, for example, may be a mobile phone or a tablet computer.

In a possible implementation, the collection apparatus in embodiments of this application may be integrated into the vehicle, or may be an apparatus that can communicate with the vehicle. For example, the collection apparatus is a road side unit (road side unit, RSU).

According to a first aspect, an embodiment of this application provides a prompt method, including: obtaining state of charge information and parking information of a vehicle, where the parking information includes information about an environment around the vehicle; and determining, based on the state of charge information and the parking information, whether a user has a charging intent; and when determining that the user has the charging intent, controlling a prompt apparatus to output first prompt information, where the first prompt information indicates the user to open a charging cover of the vehicle.

According to the method, after the vehicle enters a parking lot or the vehicle is parked, whether the user has the charging intent may be determined based on the obtained state of charge information and parking information; and when it is determined that the user has a parking intent, the prompt apparatus is controlled to output the first prompt information, to prompt the user to open the charging cover in a timely manner. In this way, it can be ensured that the charging cover has been opened before the user operates a charging connector, thereby effectively improving charging experience of the user.

In a possible implementation, obtaining the state of charge information and the parking information of the vehicle includes: obtaining the state of charge information and the parking information when a first condition is met, where the first condition includes at least one of the following: the vehicle enters a parking lot; the vehicle is in a parked state; or a first instruction is received, where the first instruction is used to determine whether the user has the charging intent.

In a possible implementation, before controlling the prompt apparatus to output the first prompt information, the method further includes: determining that a gear status of the vehicle is a P gear or a vehicle speed is zero.

In a possible implementation, determining, based on the state of charge information and the parking information, that the user has the charging intent includes: determining, based on the state of charge information, whether a state of charge of the vehicle is less than a first threshold; determining, based on the parking information, whether a current parking space of the vehicle is a charging parking space; and when the state of charge of the vehicle is less than the first threshold and the current parking space of the vehicle is the charging parking space, determining that the user has the charging intent.

In a possible implementation, the parking information includes a plurality of frames of images. Determining, based on the parking information, whether the current parking space of the vehicle is the charging parking space includes: when a charging sign and a charging facility are detected in the plurality of frames of images, determining that the current parking space of the vehicle is the charging parking space; or when a charging facility is detected in the plurality of frames of images, determining that the current parking space of the vehicle is the charging parking space, where the charging sign includes a pattern and/or a text, and the charging facility includes a charging pile and/or a charging connector.

In a possible implementation, the method further includes: when determining that the user has the charging intent, controlling the prompt apparatus to display a first image, where the first image includes at least one of the charging sign, the charging text, or the charging pile.

In a possible implementation, when the vehicle enters the parking lot, the vehicle speed of the vehicle is less than a second threshold, or signal strength of a global navigation satellite system GNSS of the vehicle is less than a third threshold, or a location of the vehicle is within an area range of the parking lot.

According to a second aspect, an embodiment of this application further provides a head-first-arrival parking apparatus. The apparatus may be configured to perform the operations in the first aspect. For example, the apparatus may include modules or units configured to perform the operations in any one of the first aspect or any possible implementation of the first aspect. For example, the apparatus includes an obtaining unit and a processing unit.

The obtaining unit is configured to obtain state of charge information and parking information of a vehicle, where the parking information includes information about an environment around the vehicle.

The processing unit is configured to: determine, based on the state of charge information and the parking information, whether a user has a charging intent; and when determining that the user has the charging intent, control the prompt apparatus to output first prompt information, where the first prompt information indicates the user to open a charging cover of the vehicle.

In a possible implementation, the obtaining unit is specifically configured to: obtain the state of charge information and the parking information when a first condition is met, where the first condition includes at least one of the following: the vehicle enters a parking lot; the vehicle is in a parked state; or a first instruction is received, where the first instruction is used to determine whether the user has the charging intent.

In a possible implementation, before controlling the prompt apparatus to output the first prompt information, the processing unit is further configured to determine that a gear status of the vehicle is a P gear or a vehicle speed is zero.

In a possible implementation, the processing unit is specifically configured to: determine, based on the state of charge information, whether a state of charge of the vehicle is less than a first threshold; determine, based on the parking information, whether a current parking space of the vehicle is a charging parking space; and when the state of charge of the vehicle is less than the first threshold and the current parking space of the vehicle is the charging parking space, determine that the user has the charging intent.

In a possible implementation, the parking information corresponds to a plurality of frames of images. The processing unit is specifically configured to: when a charging sign and a charging facility are detected in the plurality of frames of images, determine that the current parking space of the vehicle is the charging parking space; or when a charging facility is detected in the plurality of frames of images, determine that the current parking space of the vehicle is the charging parking space, where the charging sign includes a pattern and/or a text, and the charging facility includes a charging pile and/or a charging connector.

In a possible implementation, the processing unit is further configured to: when determining that the user has the charging intent, control the prompt apparatus to display a first image, where the first image includes the charging sign and/or the charging facility.

In a possible implementation, when the vehicle enters the parking lot, the vehicle speed of the vehicle is less than a second threshold, or signal strength of a global navigation satellite system GNSS of the vehicle is less than a third threshold, or a location of the vehicle is within an area range of the parking lot.

According to a third aspect, an embodiment of this application provides a chip system, including a processor, and optionally further including a memory. The memory is configured to store a computer program, and the processor is configured to invoke the computer program from the memory and run the computer program, so that a prompt apparatus on which the chip system is installed performs the method according to any one of the first aspect or any possible implementation of the first aspect.

According to a fourth aspect, an embodiment of this application provides a vehicle. The vehicle performs the method according to any one of the first aspect or any possible implementation of the first aspect.

According to a fifth aspect, an embodiment of this application provides a computer program product. The computer program product includes computer program code. When the computer program code is run by a computer, the reported information processing apparatus is enabled to perform the method according to any one of the first aspect or any possible implementation of the first aspect.

According to a sixth aspect, an embodiment of this application provides a computer-readable storage medium. The computer-readable storage medium stores a program, and the program enables a computer to perform the method according to any one of the first aspect or any possible implementation of the first aspect.

For beneficial effects of the second aspect to the sixth aspect, refer to corresponding descriptions in the first aspect. Details are not described herein again.

### BRIEF DESCRIPTION OF DRAWINGS

FIG. 1 is a diagram of a system architecture according to an embodiment of this application;
FIG. 2 is a schematic flowchart of a prompt method according to an embodiment of this application;
FIG. 3 is a diagram of a scenario of charging intent identification according to an embodiment of this application;
FIG. 4 is a schematic flowchart of detecting a charging parking space according to an embodiment of this application;
FIG. 5 is a diagram of a scenario of charging parking space detection according to an embodiment of this application;
FIG. 6A and FIG. 6B are a schematic flowchart of a prompt method according to an embodiment of this application;
FIG. 7 is a diagram of a structure of a first prompt apparatus according to this application; and
FIG. 8 is a diagram of a structure of a second prompt apparatus according to this application.

### DESCRIPTION OF EMBODIMENTS

In a charging scenario of a vehicle, when performing a charging operation on the vehicle, a user often forgets to open a charging cover. This brings a great trouble to the user.

In view of this, embodiments of this application provide a prompt method and apparatus, to improve vehicle charging experience of a user. According to the method, after a vehicle enters a parking lot or a vehicle is parked, whether the user has a charging intent may be determined based on obtained state of charge information and parking information; and when it is determined that the user has a parking intent, a prompt apparatus is controlled to output first prompt information, to prompt the user to open a charging cover in a timely manner. In this way, it can be ensured that the charging cover has been opened before the user operates a charging connector, thereby effectively improving the charging experience of the user.

The prompt method provided in this application is applicable to a terminal device having a communication capability, and in particular, to a terminal device having a human-machine interaction capability. The terminal device may be an intelligent transportation device having a communication ability, for example, a car, a ship, an uncrewed aerial vehicle, a train, a freight wagon, or a truck. Alternatively, the terminal device may be a computer device having a communication capability, for example, a desktop computer, a personal computer, or a server. Specifically, the terminal device may be a cloud server. It should be further understood that the terminal device may alternatively be a portable electronic device, for example, a mobile phone, a tablet computer, a palmtop computer, a headset, a speaker, a wearable device (for example, a smartwatch), a vehicle-mounted device, a virtual reality device, or an augmented reality device.

The following describes the technical solutions in embodiments of this application with reference to the accompanying drawings in embodiments of this application. It is clear that the described embodiments are merely a part rather than all of embodiments of this application.

It should be noted that terms "system" and "network" in embodiments of this application may be used interchangeably. "At least one" means one or more, and "a plurality of" means two or more. "And/Or" describes an association relationship between associated objects, and indicates that three relationships may exist. For example, A and/or B may indicate the following cases: Only A exists, both A and B exist, and only B exists, where A and B may be singular or plural. A character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

Unless otherwise specified, ordinal numbers such as "first" and "second" mentioned in embodiments of this application are used to distinguish between a plurality of objects, but are not used to limit priorities or importance degrees of the plurality of objects. For example, a first threshold, a second threshold, and a third threshold are merely used to distinguish between different thresholds, and do not indicate different priorities, importance degrees, or the like of the three thresholds.

For ease of understanding of embodiments of this application, a system architecture to which embodiments of this application are applicable is first described.

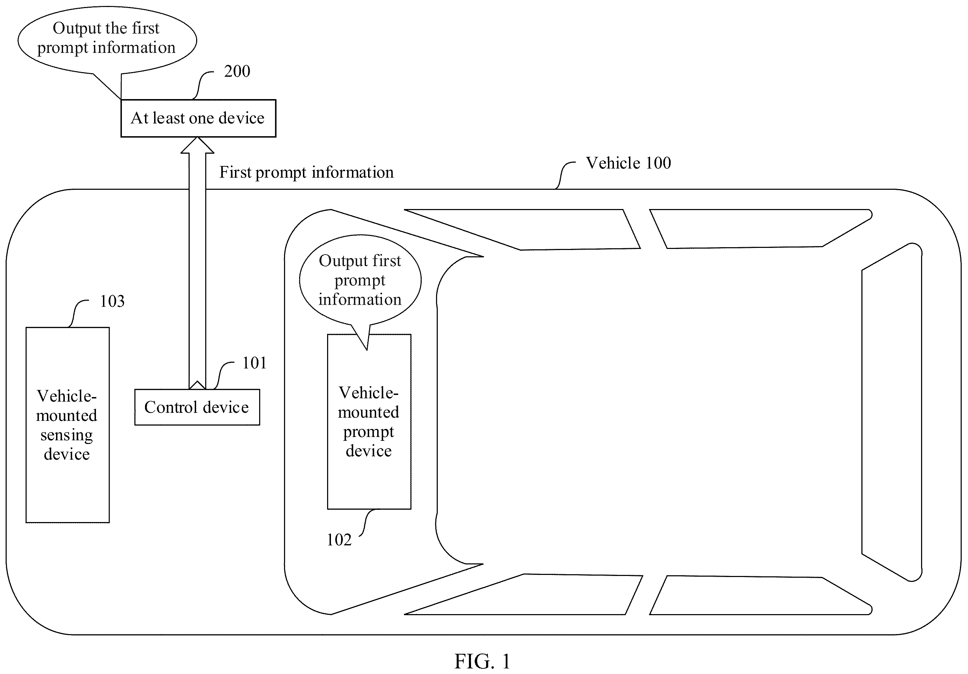

FIG. 1 is a diagram of an in-vehicle system architecture to which an embodiment of this application is applicable. In this scenario, a vehicle 100 includes a control device 101, a vehicle-mounted prompt device 102, and a vehicle-mounted sensing device 103. It may be understood that the control device 101, the vehicle-mounted prompt device 102, and the vehicle-mounted sensing device 103 may be subparts of an in-vehicle system.

It should be noted that an electronic/electrical architecture (electrical/electronic architecture, EEA) applicable to the vehicle 100 may be any one of a distributed ECU architecture, a domain controller EEA, or a centralized EEA. The control device 101 has different implementations in different electronic/electrical architectures. The following describes the different electronic/electrical architectures.

### Architecture 1: Distributed ECU architecture

In the distributed ECU architecture, each function of a vehicle is controlled by a specific electronic control unit (electronic control unit, ECU). Correspondingly, if the electronic/electrical architecture of the vehicle 100 is the distributed ECU architecture, the control device 101 may be an ECU configured to control the vehicle-mounted prompt device 102.

### Architecture 2: Domain controller EEA

In the domain controller EEA, some vendors integrate functions of vehicle-mounted controllers based on different domain division, and further classify the vehicle-mounted controllers into an intelligent driving domain controller, a power domain controller, a chassis domain controller, a vehicle body domain controller, and a cockpit domain controller. Some other vendors further integrate a power domain, a chassis domain, and a vehicle body domain into a vehicle control domain, and further classify vehicle-mounted controllers into a vehicle domain controller, an intelligent driving domain controller, and a cockpit domain controller. In addition, some other vendors integrate an intelligent cockpit domain with an intelligent driving domain, and a single vehicle-mounted chip is used to implement intelligent driving and control an intelligent cockpit. The intelligent driving domain controller usually needs to be connected to the vehicle-mounted sensing device 103, to process information (for example, pavement information) sensed by the vehicle-mounted sensing device 103, to as to perform target positioning, path planning, decision-making control, or wireless communication. The power domain controller may provide a power source for a vehicle, to drive the vehicle to travel. The chassis domain controller is configured to control functions such as braking, steering, or suspension of the vehicle. The vehicle body domain controller may be configured to control a front part (for example, a front vehicle indicator), a middle part (for example, a door or a window) of the vehicle, and a rear part (for example, a rear brake light, a rear position light, a rear door lock, or even a double strut). The cockpit domain controller may be configured to control a component associated with the intelligent cockpit domain controller. The component associated with the intelligent cockpit domain controller may be, for example, at least one of a smart seat, a head up display (head up display, HUD), a cockpit (cockpit), and an IVI system. The vehicle domain controller may collect an accelerator pedal signal, a brake pedal signal, and a signal of another component, and perform corresponding determining, to perform at least one of driving torque control, braking energy optimization control, vehicle energy management, controller area network (controller area network, CAN) maintenance and management, fault diagnosis and handling, or vehicle status monitoring.

Correspondingly, if the electronic/electrical architecture of the vehicle 100 is the domain controller EEA, the control device 101 may be a cockpit domain controller, or the control device 101 may be a vehicle-mounted chip. The vehicle-mounted chip integrates functions of an intelligent driving domain controller and the cockpit domain controller.

### Architecture 3: Centralized EEA

In the centralized EEA, an onboard computing platform is disposed. The onboard computing platform may control related components in an intelligent driving domain, an intelligent cockpit domain, a vehicle body domain, a power domain, and a chassis domain.

Correspondingly, if the electronic/electrical architecture of the vehicle 100 is the centralized EEA, the control device 101 may be an onboard computing platform.

The vehicle-mounted prompt device 102 is a vehicle-mounted device configured to output prompt information. For example, the vehicle-mounted prompt device 102 may output first prompt information, where the first prompt information is used to prompt a user to open a charging cover of the vehicle 100. It should be understood that the vehicle-mounted prompt device 102 may be one or more vehicle-mounted terminal devices, for example, may be at least one of a vehicle-mounted speaker, a vehicle-mounted display (also referred to as a "vehicle-mounted central control display"), a vehicle-mounted prompt light, a vehicle-mounted HUD, or a vehicle-mounted seat.

The vehicle-mounted sensing device 103 may be configured to collect information about an environment around the vehicle 100. The information about the environment may include, for example, image information corresponding to a parking lot in which the vehicle 100 is located, a charging facility (for example, a charging pile or a charging connector) around the vehicle 100, a charging sign, a parking space boundary, and the like. The vehicle-mounted sensing device 103 may include at least one of a camera, a lidar, or a millimeter-wave radar, for example, may be a dashboard camera.

In a possible implementation, after the vehicle 100 enters the parking lot or after the vehicle 100 is parked, the control device 101 may obtain state of charge information of the vehicle 100, and the vehicle-mounted sensing device 103 may obtain image information corresponding to a charging facility (for example, a charging pile or a charging connector) around the vehicle 100, a charging sign, a parking space boundary, and the like, to form corresponding parking information. Further, the control device 101 may determine, based on the state of charge information and the parking information of the vehicle 100, whether the user has a charging intent; and when determining that the user has a parking intent, the vehicle-mounted prompt device 102 is controlled to output the first prompt information, to prompt the user to open the charging cover in a timely manner. In this way, it can be ensured that the charging cover has been opened before the user operates a charging connector, thereby effectively improving charging experience of the user.

Optionally, when the control device 101 determines that the user has the charging intent, the control device 101 may further send the first prompt information to at least one device 200, and further output the first prompt information via the at least one device 200, thereby effectively improving a probability that the user opens the charging cover in a timely manner. The at least one device 200 is a non-vehicle-mounted prompt apparatus (for example, at least one of a mobile phone, a headset, or an intelligent wearable device) disposed outside the vehicle 100.

The following describes the technical solutions provided in embodiments of this application with reference to specific accompanying drawings.

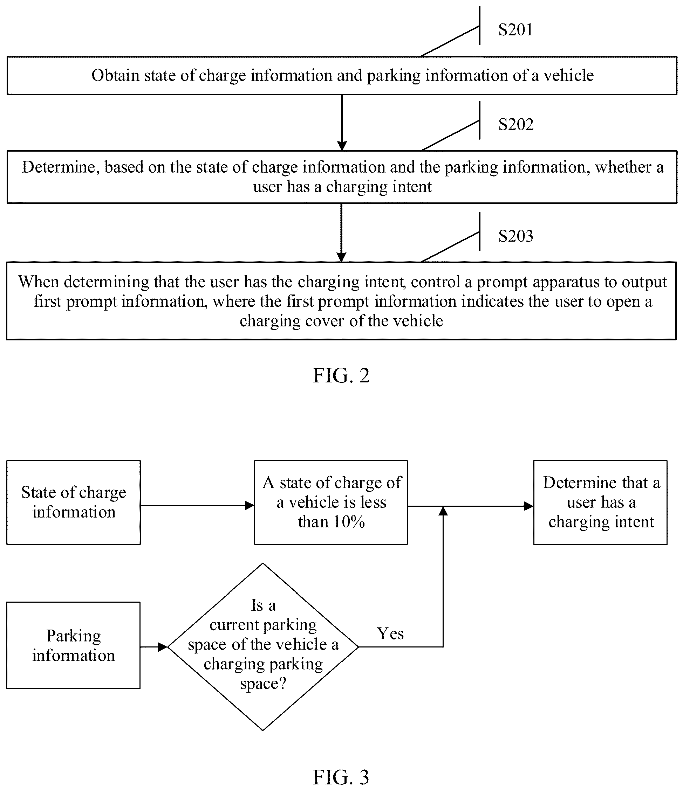

FIG. 2 is a schematic flowchart of a prompt method according to an embodiment of this application. In FIG. 2, the technical solution shown in FIG. 2 is described by using an example in which the method is applied to the control device 101 in the system architecture shown in FIG. 1. The method includes:
S201: Obtain state of charge information and parking information of a vehicle.

The state of charge information indicates a current state of charge of a vehicle-mounted battery in the vehicle. The parking information includes information about an environment around the vehicle, and the information about the environment includes image information corresponding to a charging facility (for example, a charging pile or a charging connector), a charging sign, a parking space boundary, and the like.

In a possible implementation, the control device may obtain the state of charge information and the parking information when a first condition is met.

There are a plurality of implementations for the first condition, and the following describes the implementations in cases.

Case 1: The first condition is that the vehicle enters a parking lot.

When the vehicle enters the parking lot, a vehicle speed of the vehicle is less than a second threshold, or signal strength of a global navigation satellite system GNSS of the vehicle is less than a third threshold, or a location of the vehicle is within an area range of the parking lot. Therefore, the control device may determine, in the following manner, whether the vehicle enters the parking lot:
Manner 1: When the vehicle speed of the vehicle is less than the second threshold, the control device determines that the vehicle enters the parking lot. For example, the second threshold is 5 km/h. When the vehicle speed of the vehicle is less than 5 km/h, the control device considers that the vehicle enters the parking lot.
Manner 2: When the signal strength of the global navigation satellite system (Global Navigation Satellite System, GNSS) of the vehicle is less than the third threshold, the control device determines that the vehicle enters the parking lot. For example, the third threshold may be, for example, 3 dbm. If the signal strength 2 of the GNSS of the vehicle is 1 dbm, the control device considers that the vehicle has entered the parking lot.
Manner 3: When the location of the vehicle is within the area range of the parking lot, it is determined that the vehicle enters the parking lot. For example, a longitude range of the parking lot is 73°33'E to 135°05'E, a latitude range is 3°51'N to 53°33'N, a longitude of the vehicle is 80°33', and a longitude of the vehicle is 4°51'N. In this case, the control device determines that the vehicle enters the parking lot.
Manner 4: When the vehicle speed of the vehicle is less than the second threshold, and the signal strength of the global navigation satellite system GNSS of the vehicle is less than the third threshold, the control device determines that the vehicle enters the parking lot.
Manner 5: When the vehicle speed of the vehicle is less than the second threshold, the signal strength of the global navigation satellite system GNSS of the vehicle is less than the third threshold, and the location of the vehicle is within the area range of the parking lot, the control device determines that the vehicle enters the parking lot.

In Case 1, when the vehicle enters the parking lot, the control device starts a charging parking space detection procedure. This effectively increases efficiency of detecting a charging parking space, and can open the charging parking space in a timely manner when a user needs to perform charging.

Case 2: The first condition is that the vehicle is in a parked state.

In Case 2, when the vehicle is in the parked state, the control device starts a charging parking space detection procedure. This can effectively improve accuracy of detecting a charging parking space.

Case 3: The first condition is that a first instruction is received, where the first instruction is used to determine whether a user has a charging intent.

The first instruction is a human-machine interaction instruction entered by the user, for example, may be a voice instruction, a text instruction, a button instruction, a gesture instruction, or an image instruction. Alternatively, the first instruction may be an instruction triggered by an in-car voice assistant.

In Case 3, the user may actively trigger a charging parking space detection procedure.

S202: Determine, based on the state of charge information and the parking information, whether a user has a charging intent.

In S202, whether the user has the charging intent is determined based on the state of charge information and the parking information of the vehicle, so that the charging intent of the user can be more accurate.

In a possible implementation, a process in which the control device determines, based on the state of charge information and the parking information, that the user has the charging intent includes: determining, based on the state of charge information, whether a state of charge of the vehicle is less than a first threshold; determining, based on the parking information, whether a current parking space of the vehicle is a charging parking space; and when the state of charge of the vehicle is less than the first threshold and the current parking space of the vehicle is the charging parking space, determining that the user has the charging intent.

For ease of understanding, FIG. 3 is a diagram of a scenario of charging intent determining. In FIG. 3, an example in which the first threshold is 10% is used, a current state of charge of the vehicle is 8%, and a current parking space of the vehicle is a charging parking space. In this case, the control device may determine that the user has the charging intent.

In a possible implementation, the parking information includes a plurality of frames of images. Determining, based on the parking information, whether the current parking space of the vehicle is the charging parking space includes: when a charging sign and a charging facility are detected in the plurality of frames of images, determining that the current parking space of the vehicle is the charging parking space; or when a charging facility is detected in the plurality of frames of images, determining that the current parking space of the vehicle is the charging parking space, where the charging sign includes a pattern and/or a text, and the charging facility includes a charging pile and/or a charging connector. In this way, whether the current parking space is the charging parking space is determined by detecting the charging sign and/or the charging facility (the charging pile, the charging connector, or the like).

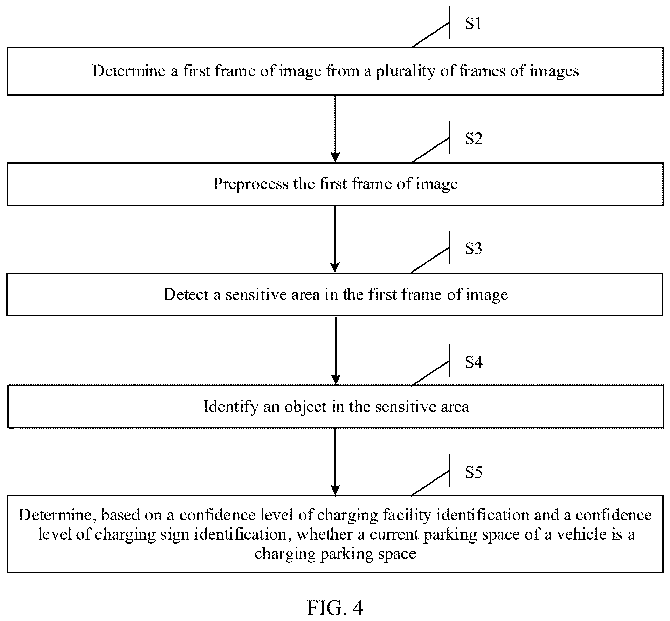

FIG. 4 is a schematic flowchart of detecting a charging parking space. A procedure includes the following steps.

S1: Determine a first frame of image from a plurality of frames of images.

The first frame of image includes ambient panoramic information of a vehicle (for example, image information obtained when the vehicle is more than 10 meters away from a charging parking space) and charging facility-related information (that is, image information obtained when the vehicle is more than 5 meters away from a charging facility). Image imaging quality of the first frame of image is good, and image motion blur caused by motion of the vehicle is lightest.

The first frame of image may be one or more frames of images. This is not limited in embodiments of this application.

S2: Preprocess the first frame of image.

A preprocessing process may be implemented by using an image enhancement technology. For example, processing such as dark light enhancement, contrast enhancement, and image deblurring may be performed on the first frame of image, to effectively improve definition of the first frame of image, thereby effectively improving accuracy of charging parking space detection.

S3: Detect a sensitive area in the first frame of image.

In this embodiment of this application, the sensitive area may be understood as a target detection box corresponding to the charging facility and/or the charging sign.

In a possible implementation, the control device may train a sensitive area detection network by using a pre-collected and annotated data set, to obtain a trained sensitive area detection network, and the trained sensitive area detection network is used to identify the target detection box corresponding to the charging facility and/or the charging sign.

S4: Identify an object in the sensitive area.

In a possible implementation, the control device may train a charging facility identification network based on an annotated image of the charging facility, and input image information corresponding to the sensitive area into the identification network, to complete charging facility detection. In addition, the identification network may further output a confidence level of charging facility identification.

In a possible implementation, the control device may train a charging sign identification network based on an annotated image of the charging sign, and input image information corresponding to the sensitive area into the identification network, to complete charging sign identification. In addition, the identification network may further output a confidence level of charging sign identification.

S5: Determine, based on the confidence level of charging facility identification and the confidence level of charging sign identification, whether a current parking space of the vehicle is a charging parking space.

In a possible implementation, a probability that the current parking space of the vehicle is the charging parking space is determined based on the confidence level of charging facility identification and the confidence level of charging sign identification, and when the probability is greater than a fourth threshold, it is determined that the current parking space of the vehicle is the charging parking space.

For example, the fourth threshold is 0.85. The confidence level of charging sign identification is 0.8, and weight information corresponding to the charging sign is 0.4. The confidence level of charging facility identification is 0.9, and weight information corresponding to the charging facility is 0.6. In this case, the probability that the current parking space is the charging parking space is 0.8*0.4+0.9*0.6=0.86. The probability is greater than the fourth threshold. In this case, the current parking space of the vehicle is a charging parking space.

For another example, the fourth threshold is 0.9. The confidence level of charging sign identification is 0.8, and weight information corresponding to the charging sign is 0.4. The confidence level of charging facility identification is 0.9, and weight information corresponding to the charging facility is 0.6. In this case, the probability that the current parking space is the charging parking space is 0.8*0.4+0.9*0.6=0.86. The probability is less than the fourth threshold. In this case, the current parking space of the vehicle is not a charging parking space.

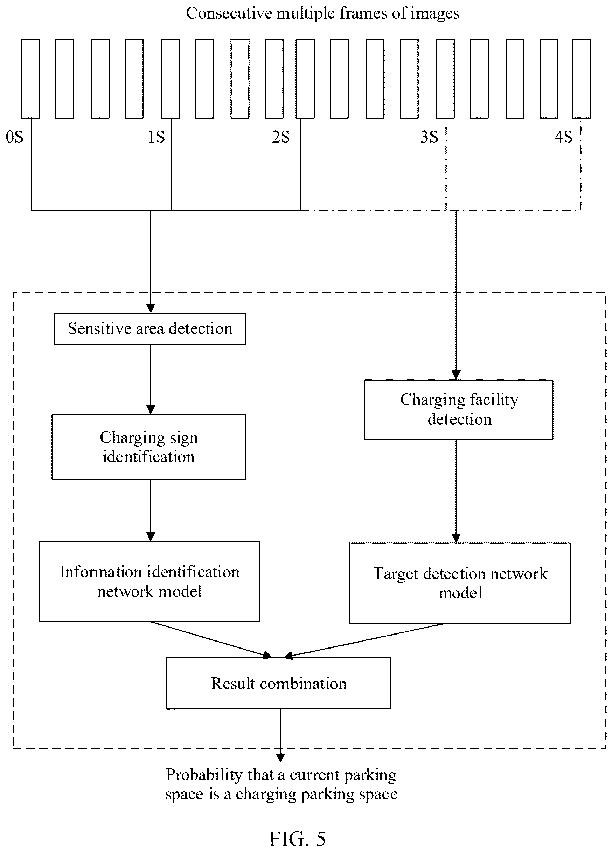

For ease of understanding, FIG. 5 is a diagram of a scenario of charging parking space detection. After sensitive area detection is performed on a plurality of frames of images, a charging sign is identified by using an information identification network model, to obtain a charging sign identification result. In addition, the plurality of frames of images are processed by using a target detection network model, to detect a charging facility, and output a charging facility identification result. The two results are combined, to determine the probability that the current parking space is the charging parking space.

S203: When determining that the user has the charging intent, control a prompt apparatus to output first prompt information, where the first prompt information indicates the user to open a charging cover of the vehicle.

In S203, when determining that the user has a parking intent, the control device may control the prompt apparatus to output the first prompt information, to prompt the user to open the charging cover in a timely manner. In this way, the charging cover can be opened in a timely manner (for example, the charging cover can be opened before the user operates the charging connector), thereby effectively improving charging experience of the user.

The first prompt information may be, for example, at least one of voice information, text information, and image information. This is not specifically limited in embodiments of this application. For example, the first prompt information may be, for example, voice information "Please open the charging cover of the vehicle" output by a vehicle-mounted speaker.

To enable an operation of opening the charging cover by the user to better meet a requirement of a charging scenario, in a possible implementation, before controlling the prompt apparatus to output the first prompt information, the control device further needs to determine that a gear status of the vehicle is a P gear or a vehicle speed is zero. In other words, the control device controls the prompt apparatus to output the first prompt information only after determining that the vehicle is parked.

In a possible implementation, when determining that the user has the charging intent, the control device may further control the prompt apparatus to display a first image, where the first image includes information about the charging sign and/or the charging facility. In this way, the prompt apparatus may display the image including the charging sign and/or the charging facility, so that the user intuitively determines whether the charging cover needs to be opened.

To show the technical solutions provided in this application more clearly, the following describes the prompt method provided in this application by using embodiments. It should be noted that the following descriptions are merely examples of the technical solutions provided in this application, and do not constitute a limitation on the technical solutions provided in this application. Any manner that is used to resolve the technical problem of this application and that is obtained based on a combination or variation of the following embodiments falls within the protection scope of this application.

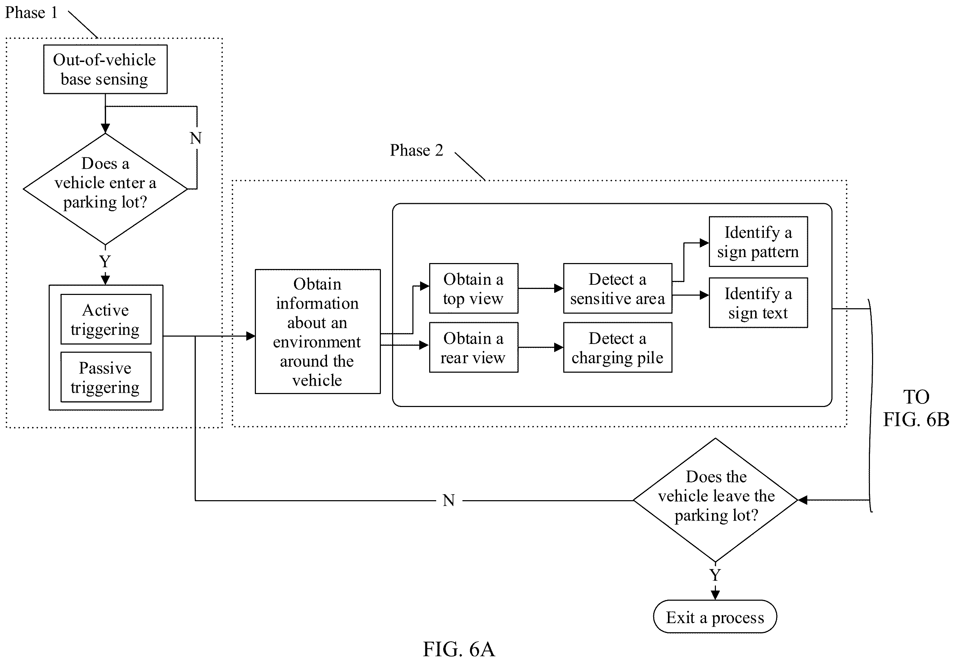

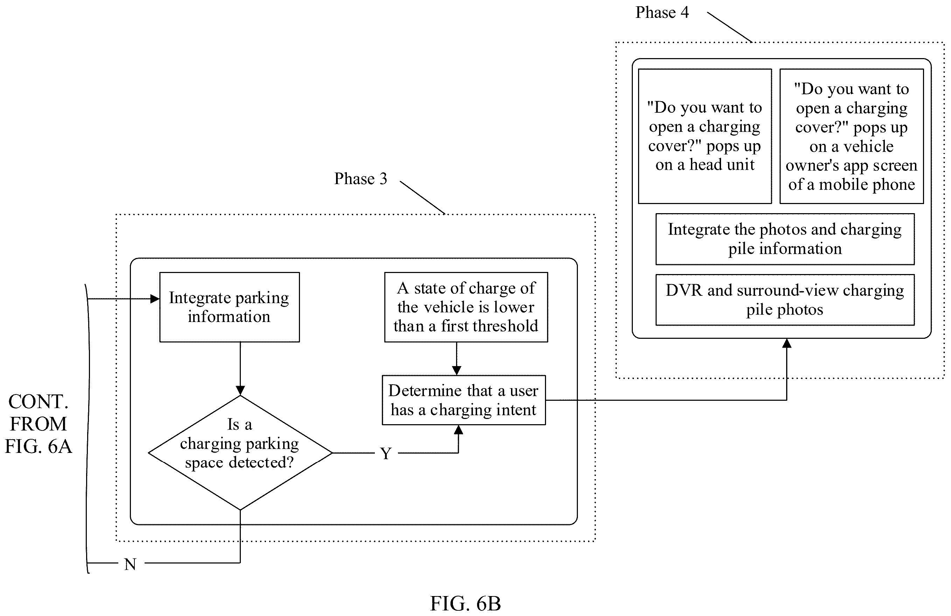

The following describes the solutions in embodiments of this application in phases with reference to the scenario shown in FIG. 6A and FIG. 6B.

Phase 1: Determine whether a vehicle enters a parking lot.

Specifically, the vehicle may sense a location of a vehicle base via an out-of-vehicle camera, to determine whether the vehicle enters the parking lot. Further, a charging parking space detection procedure is triggered. Optionally, a user may further actively trigger the charging parking space detection procedure by entering a voice instruction, a text instruction, or the like.

Phase 2: Obtain parking information of the vehicle.

Specifically, the vehicle may obtain information about an environment around the vehicle, where the information about the environment includes a top view and a rear view. Further, a control device may detect a sensitive area in the top view, identify a charging-related sign pattern and sign text, and output a corresponding identification result. In addition, the control device may input the rear view into a target detection model of a charging facility, and detect a charging pile by using the target detection model, to obtain a corresponding detection result.

Phase 3: Charging intent identification.

In Phase 3, the control device may combine the identification result of the charging-related sign pattern and sign text with the charging pile detection result, to determine whether the user has a charging intent.

Phase 4: Display interaction.

In Phase 4, when determining that the user has the charging intent, the control device may control a vehicle-mounted prompt apparatus to display prompt information "Are you sure you want to open a charging cover" or prompt information "Please open a charging cover", and control a mobile phone of the vehicle owner to display prompt information "Are you sure you want to open a charging cover". In addition, an image collected by a DVR and a surround-view image of the charging pile are displayed on the vehicle-mounted prompt apparatus and an interface of the mobile phone.

According to the foregoing descriptions of the solutions of this application, it may be understood that, to implement the foregoing functions, each device includes a corresponding hardware structure and/or software unit for performing each function. A person skilled in the art should be easily aware that, in combination with units and algorithm steps of the examples described in embodiments disclosed in this specification, this application can be implemented in a form of hardware or combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

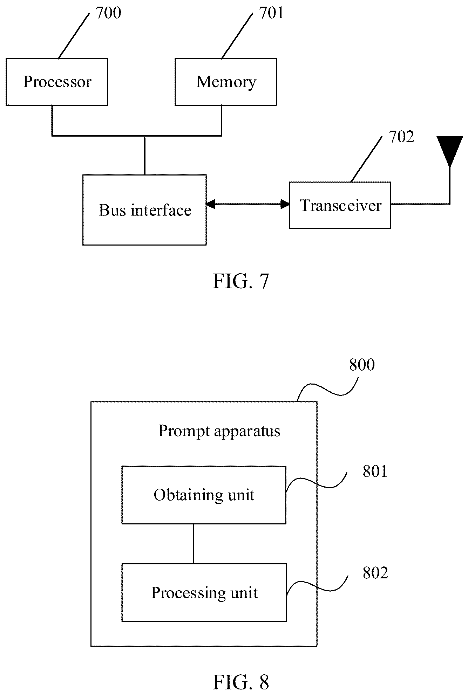

As shown in FIG. 7, an embodiment of this application provides a head-first-arrival parking apparatus. The apparatus includes a processor 700, a memory 701, and a transceiver 702.

The processor 700 is responsible for managing a bus architecture and general processing, and the memory 701 may store data used when the processor 700 performs an operation. The transceiver 702 is configured to receive and send data under control of the processor 700, to perform data communication with the memory 701.

The bus architecture may include any quantity of interconnected buses and bridges, and specifically link together various circuits of one or more processors represented by the processor 700 and a memory represented by the memory 701. The bus architecture may further link various other circuits such as a peripheral device, a voltage stabilizer, and a power management circuit. These are well known in the art, and therefore are not further described in this specification. A bus interface provides an interface. The processor 700 is responsible for managing a bus architecture and general processing, and the memory 701 may store data used when the processor 700 performs an operation.

A procedure disclosed in embodiments of this application may be applied to the processor 700, or may be implemented by the processor 700. In an implementation process, steps in the head-first-arrival parking procedure may be completed by using a hardware integrated logic circuit in the processor 700 or by using instructions in a form of software. The processor 700 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like.

The steps of the methods disclosed in embodiments of this application may be directly performed by a hardware processor, or may be performed by using a combination of hardware in the processor and a software module. The software module may be located in a mature storage medium in the art such as a random access memory, a flash memory, a read-only memory, a programmable read-only memory, an electrically erasable programmable memory, or a register. The storage medium is located in the memory 701. The processor 700 reads information in the memory 701, and completes steps of a signal processing procedure in combination with hardware of the processor 700.

As shown in FIG. 8, this application provides a prompt apparatus 800. The apparatus includes an obtaining unit 801 and a processing unit 802.

The obtaining unit 801 is configured to obtain state of charge information and parking information of a vehicle, where the parking information includes information about an environment around the vehicle.

The processing unit 802 is configured to: determine, based on the state of charge information and the parking information, whether a user has a charging intent; and when determining that the user has the charging intent, control the prompt apparatus to output first prompt information, where the first prompt information indicates the user to open a charging cover of the vehicle.

In a possible implementation, the obtaining unit 801 is specifically configured to: obtain the state of charge information and the parking information when a first condition is met, where the first condition includes at least one of the following: the vehicle enters a parking lot; the vehicle is in a parked state; or a first instruction is received, where the first instruction is used to determine whether the user has the charging intent.

In a possible implementation, before controlling the prompt apparatus to output the first prompt information, the processing unit 802 is further configured to determine that a gear status of the vehicle is a P gear or a vehicle speed is zero.

In a possible implementation, the processing unit 802 is specifically configured to: determine, based on the state of charge information, whether a state of charge of the vehicle is less than a first threshold; determine, based on the parking information, whether a current parking space of the vehicle is a charging parking space; and when the state of charge of the vehicle is less than the first threshold and the current parking space of the vehicle is the charging parking space, determine that the user has the charging intent.

In a possible implementation, the parking information includes a plurality of frames of images. The processing unit 802 is specifically configured to: when a charging sign and a charging facility are detected in the plurality of frames of images, determine that the current parking space of the vehicle is the charging parking space; or when a charging facility is detected in the plurality of frames of images, determine that the current parking space of the vehicle is the charging parking space, where the charging sign includes a pattern and/or a text, and the charging facility includes a charging pile and/or a charging connector.

In a possible implementation, the processing unit 802 is further configured to: when determining that the user has the charging intent, control the prompt apparatus to display a first image, where the first image includes the charging sign and/or the charging facility.

In a possible implementation, when the vehicle enters the parking lot, the vehicle speed of the vehicle is less than a second threshold, or signal strength of a global navigation satellite system GNSS of the vehicle is less than a third threshold, or a location of the vehicle is within an area range of the parking lot.

In some possible implementations, the aspects of the prompt method provided in embodiments of this application may be further implemented in a form of program product, and the program product includes program code. When the program code is run on a computer device, the program code is used to enable the computer device to perform the steps of the prompt method described in this specification according to the example implementations of this application.

The program product may use one or any combination of more readable media. The readable medium may be a readable signal medium or a readable storage medium. The readable storage medium may be, for example, but is not limited to, an electrical, a magnetic, an optical, an electromagnetic, an infrared, or a semiconductor system, apparatus, or device, or any combination thereof. More specific examples (non-exhaustive) of the readable storage medium include: an electrical connection having one or more conductors, a portable disk, a hard disk drive, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

According to this implementation of this application, the program product for prompting to open the charging cover of the vehicle may be a portable compact disc read-only memory (CD-ROM) and include the program code, and may run on a server device. However, the program product in this application is not limited thereto. In this document, the readable storage medium may be any tangible medium that includes or stores a program, and the program may be used by or in combination with a communication transmission apparatus or component.

The readable signal medium may include a data signal propagated in a baseband or as a part of a carrier, where the data signal carries readable program code. The propagated data signal may be in various forms, including, but not limited to, an electromagnetic signal, an optical signal, or any suitable combination thereof. The readable signal medium may alternatively be any readable medium other than the readable storage medium. The readable medium may send, propagate, or transmit a program for use by or for use in combination with a recurrent network action system, apparatus, or device.

The program code included on the readable medium may be transmitted using any suitable medium, including, but not limited to, wireless, wired, optical cable, RF, or any suitable combination thereof.

The program code for performing operations of this application may be written in any combination of one or more program design languages. The program design languages include object-oriented program design languages such as Java and C++, and further include a conventional procedural program design language such as a "C" language or a similar program design language. The program code may be executed entirely on a user computing device, partially on user equipment, as a separate software package, partially on a user computing device and partially on a remote computing device, or entirely on a remote computing device or server. In a situation involving a remote computing device, the remote computing device may be connected to a user computing device over any kind of network, including a local area network (LAN) or a wide area network (WAN), or may be connected to an external computing device.

An embodiment of this application further provides a computing device-readable storage medium for a head-first-arrival parking method, that is, content is not lost after a power failure. The storage medium stores a software program including program code. When the program code is run on a computing device, any one of the foregoing head-first-arrival parking solutions in embodiments of this application can be implemented when the software program is read and executed by one or more processors.

The foregoing describes this application with reference to block diagrams and/or flowcharts of the method, the apparatus (system), and/or the computer program product according to embodiments of this application. It should be understood that a block in the block diagrams and/or the flowcharts and a combination of blocks in the block diagrams and/or the flowcharts may be implemented by using computer program instructions. These computer program instructions may be provided to a processor of a general-purpose computer or a dedicated computer, and/or other programmable data processing apparatuses to generate a machine such that the instructions executed by the computer processor and/or other programmable data processing apparatuses create a method for implementing a function/action specified in the block diagrams and/or flowcharts.

Correspondingly, this application may also be implemented by using hardware and/or software (including firmware, resident software, microcode, and the like). Further, in this application, a form of a computer program product on a computer-usable or computer-readable storage medium may be used, and the computer program product has computer-usable or computer-readable program code implemented in the medium for use by or use in combination with an instruction execution system. In the context of this application, the computer-usable or the computer-readable medium may be any medium that may include, store, communicate, transmit, or transfer a program, for use by or use in combination with an instruction execution system, apparatus, or device.

This application describes a plurality of embodiments in detail with reference to a plurality of flowcharts. However, it should be understood that the flowcharts and related descriptions of corresponding embodiments thereof are merely examples for ease of understanding, and shall not constitute any limitation on this application. Each step in each flowchart does not necessarily need to be performed. For example, some steps may be skipped. In addition, an execution sequence of each step is not fixed, and is not limited to that shown in the figure. The execution sequence of each step is determined based on a function and internal logic of the step.

A plurality of embodiments described in this application may be arbitrarily combined, or steps may intersect with each other for execution. An execution sequence of the embodiments or an execution sequence of the steps of the embodiments is not fixed, and is not limited to that shown in the figure. The execution sequence of the embodiments and a cross execution sequence of the steps of the embodiments should be determined based on functions and internal logic of the embodiments and the steps.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A prompt method, comprising:
obtaining state of charge information and parking information of a vehicle, wherein the parking information comprises information about an environment around the vehicle;
determining, based on the state of charge information and the parking information, whether a user has a charging intent; and
when determining that the user has the charging intent, controlling a prompt apparatus to output first prompt information, wherein the first prompt information indicates the user to open a charging cover of the vehicle.

2. The method according to claim 1, wherein obtaining the state of charge information and the parking information of the vehicle comprises:
obtaining the state of charge information and the parking information when a first condition is met, wherein
the first condition comprises at least one of the following:
the vehicle enters a parking lot;
the vehicle is in a parked state; or
a first instruction is received, wherein the first instruction is used to determine whether the user has the charging intent.

3. The method according to claim 1 or 2, wherein before controlling the prompt apparatus to output the first prompt information, the method further comprises:
determining that a gear status of the vehicle is a P gear or a vehicle speed is zero.

4. The method according to any one of claims 1 to 3, wherein determining, based on the state of charge information and the parking information, that the user has the charging intent comprises:
determining, based on the state of charge information, whether a state of charge of the vehicle is less than a first threshold;
determining, based on the parking information, whether a current parking space of the vehicle is a charging parking space; and
when the state of charge of the vehicle is less than the first threshold and the current parking space of the vehicle is the charging parking space, determining that the user has the charging intent.

5. The method according to claim 4, wherein the parking information comprises a plurality of frames of images; and
determining, based on the parking information, whether the current parking space of the vehicle is the charging parking space comprises:
when a charging sign and a charging facility are detected in the plurality of frames of images, determining that the current parking space of the vehicle is the charging parking space; or
when a charging facility is detected in the plurality of frames of images, determining that the current parking space of the vehicle is the charging parking space, wherein
the charging sign comprises a pattern and/or a text, and the charging facility comprises a charging pile and/or a charging connector.

6. The method according to any one of claims 1 to 5, wherein the method further comprises:
when determining that the user has the charging intent, controlling the prompt apparatus to display a first image, wherein
the first image comprises information about the charging sign and/or the charging facility.

7. The method according to any one of claims 1 to 6, wherein when the vehicle enters the parking lot, the vehicle speed of the vehicle is less than a second threshold, or signal strength of a global navigation satellite system GNSS of the vehicle is less than a third threshold, or a location of the vehicle is within an area range of the parking lot.

8. A prompt apparatus, comprising:
an obtaining unit, configured to obtain state of charge information and parking information of a vehicle, wherein the parking information comprises information about an environment around the vehicle; and
a processing unit, configured to: determine, based on the state of charge information and the parking information, whether a user has a charging intent; and when determining that the user has the charging intent, control the prompt apparatus to output first prompt information, wherein the first prompt information indicates the user to open a charging cover of the vehicle.

9. The apparatus according to claim 8, wherein the obtaining unit is specifically configured to:
obtain the state of charge information and the parking information when a first condition is met, wherein
the first condition comprises at least one of the following:
the vehicle enters a parking lot;
the vehicle is in a parked state; or
a first instruction is received, wherein the first instruction is used to determine whether the user has the charging intent.

10. The apparatus according to claim 8 or 9, wherein before controlling the prompt apparatus to output the first prompt information, the processing unit is further configured to:
determine that a gear status of the vehicle is a P gear or a vehicle speed is zero.

11. The apparatus according to any one of claims 8 to 10, wherein the processing unit is specifically configured to:
determine, based on the state of charge information, whether a state of charge of the vehicle is less than a first threshold;
determine, based on the parking information, whether a current parking space of the vehicle is a charging parking space; and
when the state of charge of the vehicle is less than the first threshold and the current parking space of the vehicle is the charging parking space, determine that the user has the charging intent.

12. The apparatus according to claim 11, wherein the parking information corresponds to a plurality of frames of images; and
the processing unit is specifically configured to:
when a charging sign and a charging facility are detected in the plurality of frames of images, determine that the current parking space of the vehicle is the charging parking space; or
when a charging facility is detected in the plurality of frames of images, determine that the current parking space of the vehicle is the charging parking space, wherein
the charging sign comprises a pattern and/or a text, and the charging facility comprises a charging pile and/or a charging connector.

13. The apparatus according to any one of claims 8 to 12, wherein the processing unit is further configured to:
when determining that the user has the charging intent, control the prompt apparatus to display a first image, wherein
the first image comprises information about the charging sign and/or the charging facility.

14. The apparatus according to any one of claims 8 to 13, wherein when the vehicle enters the parking lot, the vehicle speed of the vehicle is less than a second threshold, or signal strength of a global navigation satellite system GNSS of the vehicle is less than a third threshold, or a location of the vehicle is within an area range of the parking lot.

15. A prompt apparatus, comprising a processor, a transceiver, and a memory, wherein the memory stores computer program instructions, and the processor runs the computer program instructions, to implement the method according to any one of claims 1 to 7 by invoking the transceiver.

16. A terminal device, comprising a prompt apparatus, wherein the prompt apparatus is configured to perform the method according to any one of claims 1 to 7.

17. A computer-readable storage medium, wherein the computer-readable storage medium stores a computer program, and when the computer program is run, the method according to any one of claims 1 to 7 is implemented.
